# EUROPÄISCHE PATENTSCHRIFT

(11) **EP 1 375 254 B1**
(45) Veröffentlichungstag und Bekanntmachung des Hinweises auf die Patenterteilung: **01.02.2006**
(21) Anmeldenummer: 03014711.0
(22) Anmeldetag: 27.06.2003
(51) Int. Cl.: B60R 5/04, B60R 21/08

(54) **System zum Laderaumschutz von Fahrzeugen**
Protection system for vehicle loading space
Système de protection pour l'espace de chargement de véhicule

(30) Priorität: 28.06.2002 DE 10229815
(43) Veröffentlichungstag der Anmeldung: 02.01.2004
(73) Patentinhaber: BOS GmbH & Co. KG, 73760 Ostfildern (DE)
(72) Erfinder: Schlecht, Werner P., 71665 Vaihingen-Enz (DE); Kobiela, Andreas, 72654 Neckartenzlingen (DE); Haspel, Klaus, 72108 Rottenburg (DE); Laudenbach, Thomas, 72108 Rottenburg (DE); Seeg, Thomas, 73760 Ostfildern (DE)
(74) Vertreter: Patentanwälte Ruff, Wilhelm, Beier, Dauster & Partner

(56) Entgegenhaltungen:
- DE-A- 19 645 503
- DE-A- 19 722 501
- DE-A- 19 728 550
- DE-A- 19 736 838
- GB-A- 2 334 488
- US-A- 5 971 433
- US-B1- 6 349 986

## Beschreibung

Die Erfindung betrifft ein System zum Laderaumschutz von Fahrzeugen, insbesondere Personenkraftwagen mit einer Schutzeinrichtung im Laderaum, bei dem Sensoren zum Erfassen von Ladegut im Laderaum, Mittel zum Erfassen des Zustandes von Schutzeinrichtungen im Laderaum und Mittel zum Erzeugen eines Laderaumzustandsignals in Abhängigkeit der Erfassung von Ladegut und der Erfassung des Zustandes der Schutzeinrichtung vorgesehen sind.

Bekannt sind Systeme zum Laderaumschutz von Fahrzeugen, die verschiedene Schutzeinrichtungen aufweisen. Beispielsweise kann in einem Laderaum eines modemen Kombinationskraftfahrzeugs ein sogenanntes Trennnetz zwischen der Oberkante der Rücksitzlehne und dem Fahrzeugdach angeordnet werden, durch das im aufgespannten Zustand verhindert wird, dass bei einem Aufprall Gegenstände aus dem Laderaum in den Fahrgastraum eindringen. Weiterhin sind waagerecht verlaufende Laderaumabdeckungen bekannt, die Ladegut im Laderaum den Blicken von Passanten entziehen. Solche Laderaumabdeckungen können auch crashsicher ausgeführt werden, so dass Sie wie ein Trennnetz im Crashfall das Eindringen von Ladegut in den Fahrgastraum verhindern.

Weiterhin sind Sicht- oder Sonnenschutzeinrichtungen bekannt, die an Seitenscheiben oder Heckscheiben eines Fahrzeugs angeordnet sind und ausgefahren werden können. Konventionelle Schutzeinrichtungen müssen durch einen Fahrzeugnutzer aktiviert oder sogar manuell ausgezogen werden. Infolgedessen unterbleibt in vielen Fällen das Aktivieren oder Ausziehen der jeweils geeigneten Schutzvorrichtungen. Im Falle eines nicht ausgezogenen Trennnetzes bei Ladegut im Laderaum kann dies zu erheblichen Sicherheitsrisiken für die Insassen eines Fahrzeugs führen.

Aus der deutschen Offenlegungsschrift DE 196 45 503 A1 ist ein System zum Laderaumschutz von Fahrzeugen bekannt, bei dem ein Sensor zum Erfassen von Ladegut im Laderaum und eine mit dem Sensor verbundene Anzeigevorrichtung vorgesehen sind. Die Anzeigevorrichtung wird dann aktiviert, wenn das Gewicht oder die Abmessungen des Ladeguts vorgegebene Werte übersteigen- Weiterhin sind Sicherungseinrichtungen in Form von Sicherungsgurten vorgesehen, wobei das Einhängen und Verzurren der Gurte anhand der Stellung der Verzurrösen erfasst wird. Wenn anhand von Meldesensoren an den Verzurrösen festgestellt wird, dass die Sicherungsgurte benutzt werden, wird eine Aktivierung der Anzeigevorrichtung verhindert, da in diesem Fall das Ladegut gesichert worden ist

Aus dem US-Patent 6,349,986 B1 ist ein wie eingangs erwähntes System zum Laderaumschutz von Fahrzeugen bekannt. Dieses System ist ein elektrisch ausfahrbares Trennnetz für ein Kombi-Fahrzeug. Weiterhin ist ein Ladegutsensor vorgesehen, der das Ladeniveau im Laderaum überwacht und dann, wenn das Ladeniveau einen vorbestimmten Betrag Oberschreitet, das Trennnetz automatisch in eine Betriebsposition bewegt.

Mit der Erfindung soll die Sicherheit und der Bedienungskomfort bei Fahrzeugen verbessert werden.

Erfindungsgemäß ist hierzu ein System zum Laderaumschutz von Fahrzeugen, insbesondere Personenkraftwagen, vorgesehen, bei dem Sensoren zum Erfassen von Ladegut im Laderaum, Mittel zum Erfassen des Zustandes von Schutzeinrichtungen im Laderaum und Mittel zum Erzeugen eines Laderaumzustandsignals in Abhängigkeit der Erfassung von Ladegut und der Erfassung des Zustandes der Schutzeinrichtung vorgesehen sind und bei dem die Schutzeinrichtung eine crashsichere Laderaumabdeckung und fakultativ auch ein Trennnetz aufweist, die elektrisch betätigbar und ansteuerbar sind, um automatisch in jeweils eine Schutzstellung gebracht zu werden, und dass dann, wenn sich Ladegut im Laderaum befindet und die Laderaumabdeckung die Schutzstellung nicht erreicht, diese in eine Ausgangsstellung zurückkehrt, wobei dann wenn weder die crashsichere aderaumabdeckung noch das fakultativ auch vorhandene Trennnetz die jeweilige Schutzstellung erreicht, ein Laderaumzustandssignal erzeugt wird, das einen unsicheren Laderaumzustand anzeigt.

Indem Ladegut im Laderaum und der Zustand von Schutzeinrichtungen erfasst werden, liegen die notwendigen Informationen vor, um ein Laderaumzustandsignal zu erzeugen. Ein solches Laderaumzustandsignal kann beispielsweise einen fahrsicheren Zustand oder einen unsicheren Zustand anzeigen. Ein fahrsicherer Zustand würde beispielsweise dann angezeigt werden, wenn sich kein Ladegut im Laderaum befindet, da dann der Zustand eines Trennnetzes oder einer crashsicheren Laderaumabdichtung unerheblich wäre. Befindet sich aber beispielsweise Ladegut im Laderaum und ist weder eine crahsichere Laderaumabdeckung noch ein Trennnetz ausgefahren, würde ein Laderaumzustandssignal erzeugt, das einen unsicheren Zustand anzeigt Das erzeugte Laderaumzustandsignal kann beispielsweise einem Fahrzeugführer durch Signallampen unterschiedlicher Farbe oder in sonstiger Weise angezeigt werden. Das Laderaumzustandssignal kann unterschiedliche Prioritäten ausweisen, beispielsweise fahrsicherer Zustand, Gefährdungspotenzial aber noch fahrsicher sowie unsicherer Zustand, nicht fahrbereit. In Abhängigkeit des Laderaumzustandsignals und dessen Priorität kann beispielsweise auch in den Startvorgang des Fahrzeugs eingegriffen werden. Darüber hinaus ist in Abhängigkeit des Laderaumzustandsignals die Ausgabe einer Empfehlung denkbar, beispielsweise, dass beim Vorhandenseiri von Ladegut das Ausfahren eines Trennnetzes und/oder einer Laderaumabdeckung sowie beim Parken des Fahrzeugs das Ausfahren von Sichtschutzeinrichtungen empfohlen wird. Als Schutzeinrichtungen können dabei Sichtschutz- und Aufprallschutzeinrichtungen sowie bewegbare Laderaumbegrenzungen vorgesehen sein. Darüber hinaus können auch Schutzeinrichtungen gegen Verschmutzung, wie ausziehbare Planen oder Abdeckungen vorgesehen sein. Beispiele für Schutzeinrichtungen und Laderaumbegrenzungen sind klappbare Rücklehnen, ausziehbare Trennnetze und ausziehbare Laderaumabdeckungen, Laderaumabteilungen durch Trennnetze oder dergleichen, ausfahrbare oder einhängbare Zwischenböden sowie Sicht- oder Sonnenschutzeinrichtungen. Zum Erfassen des Zustands von Schutzeinrichtungen im Laderaum sind beispielsweise Sensoren vorgesehen, die eine crashsichere Verriegelung oder eine crashsichere Anordnung eines Trennnetzes oder einer Laderaumabdeckung erfassen. Eingesetzt werden können beispielsweise auch Lichtschranken und dergleichen. Detektiert werden kann beispielsweise auch der eingehängte Zustand eines Sicherungsriemens. Die Zustände der einzelnen Schutzeinrichtungen können über eine Meldung im Armaturenbrett eines Fahrers angezeigt werden.

Als Beispiel eines erfindungsgemäßen Systems zum Laderaumschutz kann beispielsweise ein Kombi-Fahrzeug mit elektrisch betätigbarer Laderaumabdeckung sowie elektrisch betätigbarem Trennnetz angeführt werden. Als Sensor zur Ladeguterfassung dient entweder ein Kontaktschalter am hinteren Ende der Laderaumabdeckung oder eine Motorstromüberwachung des Antriebs der Laderaumabdeckung. Nach dem Schließen einer Heckklappe fährt die Laderaumabdeckung selbstätig zu. Kann die Laderaumabdeckung nicht schließen, da Ladegut im Laderaum im Weg ist, wird dies durch den Kontaktschalter am hinteren Ende der Laderaumabdeckung oder eine Motorstromüberwachung detektiert. Die Laderaumabdeckung fährt dann automatisch in ihre Ausgangsstellung zurück und das Rückhaltesystem, das elektrisch ausfahrbare Trennnetz, wird automatisch in die Schutzstellung bewegt. Befindet sich das Trennnetz in seiner vollständig ausgefahrenen Stellung, wird ein sicherer Laderaumzustand signalisiert. Sollte das Trennnetz nicht in seine Schutzstellung ausfahren können, wird ein unsicherer Laderaumzustand signalisiert.

In Weiterbildung der Erfindung erfassen die Sensoren zum Erfassen von Ladegut das Ladegut nach dessen Lage, Größe und Gewicht.

Die Erfassung der Lage von Ladegut ist zweckmäßig, da bei ungünstiger Lage des Ladeguts, beispielsweise am hinteren Ende des Laderaums, Gefährdungspotenzial entsteht Ein Empfehlungssignal könnte in Abhängigkeit des Laderaumzustandsignals gegeben werden, das Ladegut in eine sichere Position unmittelbar hinter eine Rücksitzbank zu verschieben. Die Erfassung der Größe des Ladeguts ist zweckmäßig, um in Abhängigkeit der Größe des Ladeguts unterschiedliche Schutzmaßnahmen zu ergreifen bzw. zu empfehlen. Beispielsweise ist das Ausfahren einer crashsicheren Laderaumabdeckung nur dann sinnvoll, wenn das Ladegut von seiner Größe her unter die Laderaumabdeckung passt Überschreitet das Ladegut das Niveau der Laderaumabdeckung, muß ein Trennnetz angebracht werden. Als Sensoren können z.B. Schaltmatten, insbesondere am Boden des Laderaums, Kraftsensoren, Drucksensoren, optische Sensoren wie Infrarotsensoren, Lichtschranken oder dergleichen eingesetzt werden. Ebenfalls auf optischem Prinzip beruht der Einsatz einer Kamera sowie nachgeschalteter Bildverarbeitungssoftware. Das Erfassen von Ladegut ist beispielsweise auch mittels Ultraschallsensoren oder Radarsystemen möglich.

In Weiterbildung der Erfindung sind die Sensoren zum Erfassen von Ladegut Bestandteil eines Fahrzeugsicherungssystems.

Beispielsweise können die Sensoren eines Alarmsystems einer Innenraumüberwachung durch Infrarot- oder Ultraschallsensoren genutzt werden. Das an und für sich zur Innenraumüberwachung und zum Diebstahlschutz vorgesehene Signal solcher Sensoren kann ebenfalls auf das Vorhandensein bzw. den Zustand von Ladegut im Laderaum hin ausgewertet werden.

In Weiterbildung der Erfindung weisen die Mittel zum Erfassen des Zustandes der Schutzeinrichtung einen an einer weiteren bewegbaren Schutzeinrichtung angeordneten Sender bzw. Empfänger und einen am Fahrzeug angeordneten Empfänger bzw. Sender auf.

Beispielsweise kann in einem ausklapp- bzw. ausfaltbaren Skisack ein Sender angeordnet sein, der von einem fahrzeugfesten Empfänger im ausgeklappten Zustand des Skisacks erkannt wird. Besonders vorteilhaft ist der Einsatz sogenannter Transponder, die an beweglichen Schutzeinrichtungen angeordnet werden und keine kabelgebundene Energiezufuhr benötigen.

Erfindungsgemäß wird ein Fahrzeug mittels der Schutzeinrichtung automatisch in einen optimalen Zustand gebracht. Eine crashsichere Laderaumabdeckung und ein fakultativ auch vorhandenes Trennnetz werden erfindungsgemäβ beim Vorhandensein von Ladegut automatisch ausgefahren, um auch ohne den manuellen Eingriff des Fahrzeugführers einen fahrsicheren Zustand herzustellen.

Neben Sicherheitsaspekten kann auch der Komfort wesentlich verbessert werden. In weiterbildung der Erfindung kann beispielsweise in Abhängigkeit der Lage oder der Größe von Ladegut im Laderaum auch die Aufteilung des Laderaums verändert werden, indem beispielsweise Trennnetze zur automatischen Aufteilung des Laderaums ausgefahren werden. Möglich ist auch die Veränderung der Aufteilung oder der Abmessung des Laderaums beim Einschieben von Ladegut, indem das Ladegut in einen gegebenenfalls beschränkten Bereich außerhalb des Fahrzeugs noch vor der Ladefläche erfasst wird. Erkennt das System beispielsweise, dass das Ladegut zu lang ist, wird beispielsweise eine Laderaumabtrennung verfahren, ein Skisack geöffnet oder eine Rücksitzbank geklappt. Auch bei hohem Ladegut kann nach dessen Erfassung beispielsweise eine Laderaumabdeckung automatisch eingezogen werden.

In Weiterbildung der Erfindung werden in Abhängigkeit des Laderaumzustandsignals und der aktuellen Geschwindigkeit und/oder Fahrsituation des Fahrzeugs Schutzeinrichtungen automatisch in eine vordefinierte Stellung gebracht.

Auf diese Weise können Schutzeinrichtungen erst dann ausgefahren werden, wenn dies die Fahrsituation erfordert. Beispielsweise kann bei hoher Fahrgeschwindigkeit oder starker Bremsung ein Trennnetz in die Sicherungsstellung gefahren werden. Gegegebenenfalls könnte das Trennnetz auch erst im Crashfall ausgefahren werden.

In Weiterbildung der Erfindung wird in Abhängigkeit des Laderaumzustandsignals und der aktuellen Geschwindigkeit und/oder Fahrsituation des Fahrzeugs das fakultativ vorhandene Trennnetz zwischen Laderaum und Insassenraum in oder entgegen einer Fahrzeuglängsrichtung verlagert oder vorgespannt.

Auf diese Weise kann im Crashfall verhindert werden, dass Ladegut das Trennnetz dehnt und kurzfristig in den Kopfbereich der Insassen gelangt.

In Weiterbildung der Erfindung sind in Abhängigkeit des Laderaumzustandsignals und auf ein Anforderungssignal hin weitere Schutzeinrichtungen im Laderaum des Fahrzeugs in eine Schutzstellung bewegbar.

Insbesondere bei exklusiven Fahrzeugen werden aus optischen Gründen empfindliche Laderaumauskleidungen verwendet. Verschmutzungen, beispielsweise durch Haustiere oder schmutziges Ladegut, können dann nicht oder nur mit sehr großem Aufwand wieder entfernt werden. Indem auf ein Anforderungssignal hin Schutzeinrichtungen in eine Schutzstellung bewegbar sind, kann eine empfindliche Laderaumauskleidung noch vor dem Einladen von Ladegut, beispielsweise durch eine Schutzplane oder sonstige Abdeckungen, vor Verschmutzung geschützt werden. Dadurch entfällt das mühsame und optisch unbefriedigende manuelle Auslegen des Laderaums mit Decken, Wannen oder ähnlichem. Beispielsweise kann ein Bodenteppich im Laderaum automatisch gewendet werden, so dass eine unempfindlichere Unterseite dem Laderaum zugewandt ist. Nach Ausladen des verschmutzten Ladeguts kann der Bodenteppich dann wieder in seine Ausgangsstellung gebracht werden, indem die optisch ansprechendere Laderaumauskleidung dem Laderaum zugewandt ist. Weiterhin können zum Schutz von Seitenverkleidungen im Laderaum beispielsweise an den Seitenscheiben vorgesehene Sichtschutzeinrichtungen bis zum Boden des Laderaums vor die Seitenverkleidungen gefahren werden. Dies gilt beispielsweise auch für Abschnitte der Laderaumverkleidung an einer Heckklappe und im Bereich der dem Laderaum zugewandten Rückseiten von Sitzlehnen. Beispielsweise könnte auch eine ausfahrbare Schutzeinrichtung für den im allgemeinen aus hellen und empfindlichen Materialien bestehenden Dachhimmel des Laderaums vorgesehen sein. Besonders zweckmäßig ist es, das Anforderungssignal beim Klappen der Rücksitzbank zu erzeugen, da dann mit einer gewissen Wahrscheinlichkeit sperriges und/oder verschmutztes Ladegut zur erwarten ist.

In Weiterbildung der Erfindung wird das Anforderungssignal durch einen Benutzer oder Sensoren ausgelöst, die Umgebungsbedingungen, wie Niederschlag und Bodenbeschaffenheit, in der Umgebung des Fahrzeugs erfassen.

Die Auslösung durch einen Benutzer kann beispielsweise mittels einer Fernsteuerung erfolgen, so dass beim Beladen eines Fahrzeugs das Ladegut nicht zunächst am Boden abgestellt werden muß, um den Laderaum entsprechend vorzubereiten. Wird das Fahrzeug bei starkem Regen oder auf schmutzigem Untergrund abgestellt, könnte dies auch durch Sensoren erfasst werden, so dass bereits vor dem Besteigen des Fahrzeugs Schutzeinrichtungen ausgefahren werden. Solche Schutzeinrichtungen könnten sowohl im Laderaum, beispielsweise um eine Laderaumauskleidung vor Verschmutzung durch einsteigende Haustiere zu schützen, sowie dem Fußraum der Fahrzeuginsassen oder auf den Rücksitzen erfolgen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine schematische Darstellung eines Systems zum Laderaumschutz gemäß einer ersten Ausführungsform der Erfindung,
- Fig. 2: das System der Fig. 1 bei ausgefahrenem Trennnetz,
- Fig. 3: eine schematische Darstellung eines weiteren Systems zum Laderaumschutz gemäß einer zweiten Ausführungsform der Erfindung,
- Fig. 4: eine schematische Darstellung eines Systems zum Laderaumschutz gemäß einer dritten Ausführungsform der Erfindung,
- Fig. 5a: eine Seitenansicht einer Einzelheit des Systems der Fig. 4,
- Fig. 5b: eine Draufsicht auf die Einzelheit der Fig. 5a,
- Fig. 6: eine schematische Darstellung eines Systems zum Laderaumschutz gemäß einer vierten Ausführungsform der Erfindung,
- Fig. 7: eine schematische Darstellung von Mitteln zum Wenden eines Laderaumteppichs in einem System zum Laderaumschutz gemäß einer fünften Ausführungsform der Erfindung,
- Fig. 8: eine schematische Darstellung eines Systems zum Laderaumschutz gemäß einer sechsten Ausführungsform der Erfindung und
- Fig. 9: eine schematische Darstellung eines Systems zum Laderaumschutz gemäß einer siebten Ausführungsform der Erfindung.

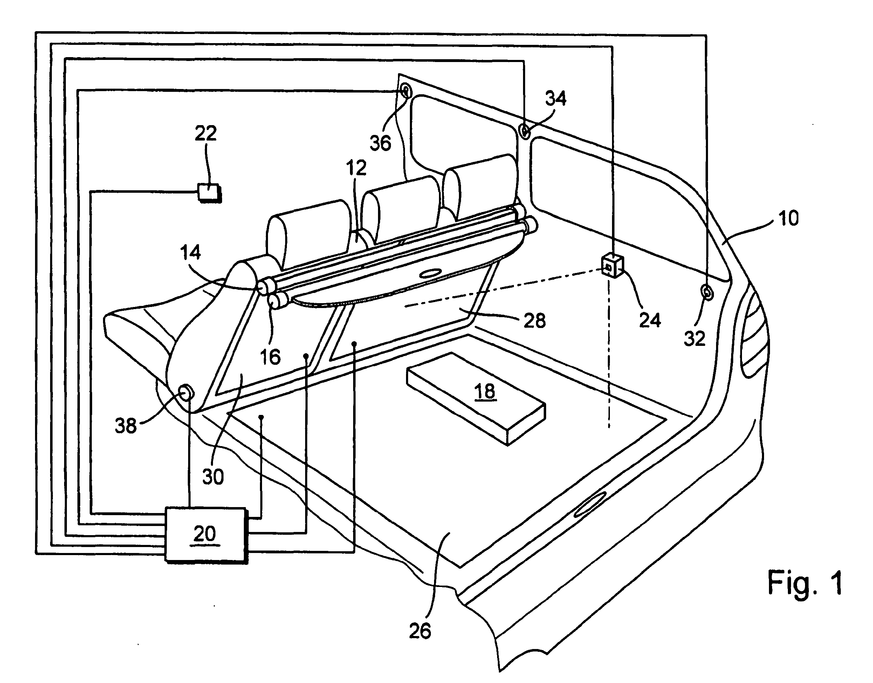

In der Darstellung der Fig. 1 ist in perspektivischer, abschnittsweiser Darstellung ein Kraftfahrzeug 10 zu erkennen, das als sogenanntes Kombi-Fahrzeug mit zum Fahrgastraum hin offenem Laderaum ausgeführt ist. Der Laderaum und der Fahrgastraum werden durch eine Rücksitzlehne 12 voneinander getrennt. Die Rücksitzlehne 12 ist geteilt, so dass sich diese auch nur teilweise nach vorne klappen lässt, um den Laderaum zu vergrößern. An einer, dem Laderaum zugewandten Rückseite der Rücksitzlehne 12 ist ein ausziehbares Trennnetz 14 sowie eine ausziehbare Laderaumabdeckung 16 vorgesehen. In dem in der Fig. 1 dargestellten Zustand sind sowohl das Trennnetz 14 als auch die Laderaumabdeckung 16 eingezogen. Im Laderaum ist schematisch ein quaderförmiges Ladegut 18 dargestellt.

Bei einem Aufprall des Ladeguts 18 ist zu befürchten, dass das Ladegut 18 über die Rücksitzlehne 12 und in den Fahrgastraum des Fahrzeugs 10 gelangt und dabei die Fahrzeuginsassen gefährdet. Das Ladegut 18 bildet somit in dem in Fig. 1 dargestellten Zustand des Laderaums ein Gefährdungspotenzial. Bei konventionellen Kraftfahrzeugen liegt es in der Verantwortung eines Fahrzeugführers, das Gefährdungspotenzial von Ladegut 18 im Laderaum zu erkennen und gegebenenfalls Gegenmaßnahmen zu treffen, beispielsweise das Trennnetz 14 oder die crashsichere Laderaumabdeckung 16 auszuziehen.

Gemäß der Erfindung sind mehrere Sensoren vorgesehen, die das Ladegut 18 im Laderaum erfassen. Weiterhin sind Sensoren vorgesehen, um den Zustand der Schutzeinrichtungen des Laderaums, nämlich des Trennetzes 14 und der Laderaumabdeckung 16 zu erfassen. Die erfassten Sensorsignale werden in einer Steuereinheit 20 verarbeitet und das in der Steuereinheit 20 erzeugte Laderaumzustandssignal wird dem Kraftfahrzeugführer mittels einer Anzeigevorrichtung 22 angezeigt.

Zur Erfassung des Ladeguts 18 im Laderaum ist ein optischer Sensor 24 vorgesehen, dessen Erfassungsbereich den vollständigen Boden des Laderaums abdeckt. Der Erfassungsbereich des Sensors 24 ist dabei so ausgelegt, dass auch ein bei umgeklappter Rücksitzbank 12 verlängerter Laderaumboden vollständig erfasst ist. Mittels des Sensors 24 wird dadurch detektiert, ob sich Ladegut 18 auf dem Laderaumboden befindet. Der Sensor 24 ist dabei bezüglich seiner Anordnung lediglich beispielhaft dargestellt. Um die vollständige Erfassung des Laderaumbodens sicherzustellen, können mehrere Sensoren 24 im Fahrzeug verteilt angeordnet sein. Neben optischen Sensoren, beispielsweise Infrarotsensoren, können auch Ultraschallsensoren oder Kameras mit nachgeschalteter Bildverarbeitung eingesetzt werden.

Neben dem Sensor 24 sind zur Erfassung von Ladegut 18 auf dem Laderaumboden Schaltmatten 26, 28 und 30 vorgesehen. Die Schaltmatte 26 überdeckt im wesentlichen den vollständigen Laderaumboden, wenn sich die Rücksitzbank 12 in ihrer aufrechten, in der Fig. 1 dargestellten Position befindet. Die Schaltmatte 28 ist auf dem in der Fig. 1 rechten, einzeln klappbaren Teil der Rücksitzlehne 12 angeordnet und deckt dadurch denjenigen Abschnitt des Laderaumbodens ab, der entsteht, wenn der rechte Abschnitt der Rücksitzlehne 12 zur Laderaumvergrößerung nach vorne geklappt wird. Die Schaltmatte 30 ist auf der Rückseite des in der Fig. 1 linken Abschnitts der Rücksitzlehne 12 angeordnet und deckt dadurch denjenigen Abschnitt des Laderaumbodens ab, der entsteht, wenn der linke Teil der Rücksitzlehne 12 zur Laderaumvergrößerung nach vorne geklappt wird.

Die Schaltmatten 26, 28 und 30 geben ein Signal ab, wenn Ladegut auf ihnen platziert wird. In dem in der Fig. 1 dargestellten Fall würde somit die Schaltmatte 26 ein Signal ausgeben, das das Vorhandensein von Ladegut 18 im Laderaum signalisiert. Neben der rein qualitativen Erfassung des Vorhandenseins von Ladegut im Laderaum können die Schaltmatten 26, 28 und 30 beispielsweise auch so gestaltet sein, dass sie einerseits eine Information über das Gewicht des Ladeguts 18 sowie über dessen Lage im Laderaum abgeben. Zur Erzeugung eines Lagesignals könnten die Schaltmatten 26, 28 und 30 beispielsweise in einzelne Abschnitte gegliedert sein oder als Array aufgebaut sein.

Das gleichzeitige Vorsehen eines optischen Sensors 24 sowie der Schaltmatten 26, 28 und 30 ist vorteilhaft, da mittels des optischen Sensors 24 auch Ladegut erfasst werden kann, dessen Gewicht zu gering ist, um die Schaltmatten 26, 28 oder 30 auszulösen. Umgekehrt kann mittels der Schaltmatten 26, 28 und 30 Ladegut erkannt werden, dessen Volumen zu klein ist, um von dem optischen Sensor 24 erkannt zu werden. Auf diese Weise wird die Sicherheit beim Erfassen von Ladegut deutlich verbessert.

Die Signale des optischen Sensors 24 und der Schaltmatten 26, 28 und 30 werden der Steuereinheit 20 zugeführt.

Um den Zustand der Schutzeinrichtungen im Bereich des Laderaum, nämlich des Trennnetzes 14 und der crashsicheren Laderaumabdeckung 16 zu erfassen, sind weitere Sensoren vorgesehen. Die Laderaumabdeckung 16 wird in ihrem ausgezogenen Zustand mit ihrem Ende im Bereich eines Sensors 32 eingehängt, der am hinteren Ende der rechten Seitenverkleidung des Laderaums am Kraftfahrzeug 10 angeordnet ist. Der Sensor 32 kann beispielsweise als einfacher Berührungsschalter ausgelegt sein, der ausgelöst wird, wenn das seitliche, hintere Ende der Laderaumabdeckung 16 in die zugehörige Ausnehmung am Fahrzeug 10 eingehängt wird. Symmetrisch zu einer Mittelebene in Fahrzeuglängsrichtung ist gegenüber dem Sensor 32 ein weiterer Sensor vorgesehen, der das Einhängen des hinteren linken Endes der Laderaumabdeckung 16 detektiert und aus Gründen der Übersichtlichkeit in der Fig. 1 nicht dargestellt ist. Das Signal des Sensors 32 wird der Steuereinheit 20 zugeführt.

Um den Zustand des Trennnetzes 14 zu erfassen, sind Sensoren 34 und 36 vorgesehen. Wie bereits in Bezug auf den Sensor 32 ausgeführt wurde, befindet sich jeweils ein zu den Sensoren 34 und 36 gleich aufgebauter Sensor an der gegenüberliegenden, in der Fig. 1 nicht dargestellten Fahrzeugseite. Die Sensoren 34 und 36 sind im Bereich von Einhängestellen für das Trennnetz 14 angeordnet und detektieren, ob das obere Ende des Trennnetzes in die jeweils dafür vorgesehenen Einhängestellen eingehängt ist. Der Sensor 34 befindet sich im Bereich der Einhängestelle, in die das Trennnetz eingehängt werden muß, wenn sich die Rücksitzlehne 12 in der in der Fig. 1 dargestellten aufrechten Position befindet. Der Sensor 36 ist im Bereich einer Einhängestelle eingeordnet, in die das Trennnetz eingehängt werden muß, wenn die Rücksitzlehne 12 gegenüber der in der Fig. 1 dargestellten Stellung zur Laderaumvergrößerung nach vorne umgeklappt ist. Die Signale der Sensoren 34 und 36 werden der Steuereinheit 20 zugeführt.

Um die Steuereinheit 20 in die Lage zu versetzen, zu entscheiden, in welcher Einhängestellung des Trennnetzes 14 ein fahrsicherer Zustand vorliegt, ist ein weiterer Sensor 38 im Bereich des Klappgelenks der Sitzlehne 12 angeordnet, dessen Signal ebenfalls der Steuereinheit 20 zugeführt wird.

Wird weder von dem Sensor 24 noch von den Schaltmatten 26, 28 und 30 Ladegut im Ladraum erfasst, liegt unabhängig von der Stellung des Trennnetzes 14, der Laderaumabdeckung 16 und der Rücksitzlehne 12 ein fahrsicherer Zustand vor. Infolgedessen erzeugt die Steuereinheit 20 ein Laderaumzustandsignal, das einen fahrsicheren Zustand anzeigt. In diesem Fall würde an die Anzeigeeinheit 22 beispielsweise kein Signal weitergeleitet, so dass diese kein Warnsignal oder während des Startvorgangs ein grünes Lichtsignal anzeigt. Wird durch den Sensor 24 oder die Schaltmatten 26, 28 und 30 dahingegen Ladegut im Laderaum erfasst, prüft die Steuereinheit 20 ab, ob sich die Rücksitzlehne 12 in aufrechter oder umgeklappter Position befindet und ob die Laderaumabdeckung 16 im Bereich des Sensors 32 oder das Trennnetz 14 im Bereich des Sensors 34 oder des Sensors 36 eingehängt ist. In Abhängigkeit dieser Prüfung gibt die Steuereinheit 20 dann ein entsprechendes Signal an die Anzeigeeinheit 22 aus. In dem in der Fig. 1 dargestellten Zustand gibt die Steuereinheit 20 ein Signal an die Anzeigeeinheit 22 aus, das einen unsicheren Zustand repräsentiert. Die Anzeigeeinheit 22 leuchtet daraufhin rot auf, um dem Fahrer eine Warnmeldung zu übermitteln. Neben der Übermittlung einer Warnmeldung könnte beispielsweise durch das Signal von der Steuereinheit 20 auch ein Startvorgang des Kraftfahrzeugs 10 abgebrochen werden, so dass das Fahrzeug erst dann gestartet werden kann, wenn die Steuereinheit 20 einen fahrsicheren Zustand signalisiert.

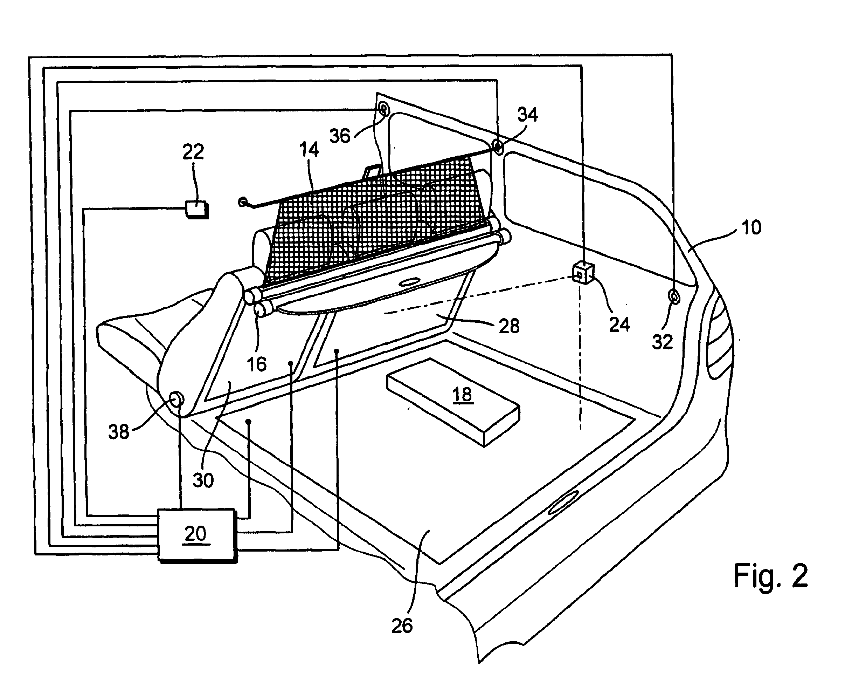

In der Darstellung der Fig. 2 ist das System zum Laderaumschutz der Fig. 1 bei ausgefahrenem Trennnetz 14 dargestellt. Wie bereits im Zusammenhang mit der Fig. 1 erläutert wurde, wird das Ladegut 18 im Laderaum durch den Sensor 14 und die Schaltmatten 26, 28 und 30 er fasst. Im Unterschied zu dem in der Fig. 1 dargestellten Zustand erkennt die Steuereinheit 20 aber, dass das Trennnetz 14 in die Einhängestellen im Bereich des Sensors 34 und gegenüber eingehängt ist. Infolgedessen stellt die Steuereinheit 20 einen fahrsicheren Zustand fest und gibt infolgedessen kein Signal oder ein den fahrsicheren Zustand repräsentierendes Signal an die Anzeigeeinheit 22 aus.

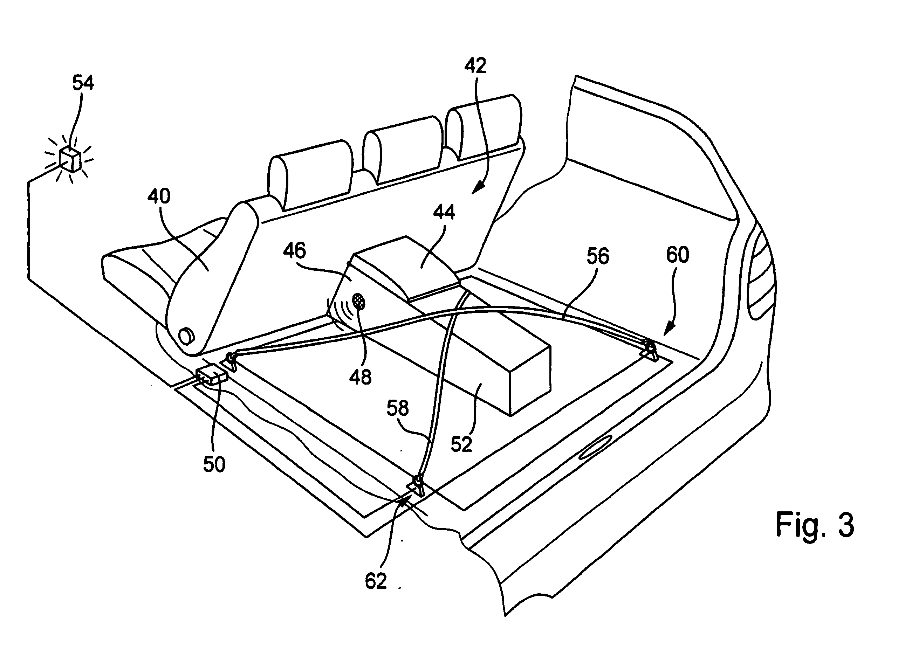

Eine zweite Ausführungsform der Erfindung ist schematisch in der Fig. 3 dargestellt. Die Darstellung der Fig. 3 zeigt den Laderaum eines Kraftfahrzeugs, der in Fahrtrichtung durch eine Rücksitzlehne 40 begrenzt ist. Die Rücksitzlehne 40 ist mit einem sogenannten Skisack 42 versehen. Der Skisack 42 weist eine an der dem Laderaum zugewandten Rückseite der Rücksitzlehne 40 angeordnete, schwenkbare Klappe 44 auf, die in die in der Fig. 3 gezeigte Stellung aufgeklappt werden kann und dadurch eine Öffnung in der Rücksitzlehne 40 zum Durchladen von langen, schmalen Gegenständen, beispielweise Skiern, freigibt. Beim Aufklappen der Klappe 44 werden Stoffseitenwände 46 mit ausgeklappt, die die Durchladeöffnung seitlich begrenzen. In der Darstellung der Fig. 3 ist lediglich die in Fahrtrichtung gesehen linke Seitenwand 46 zu erkennen. In dieser linken Seitenwand 46 ist ein Sender 48 eingenäht, der im ausgeklappten Zustand der Klappe 44 und der Seitenwand 46 Signale abgibt. Der Sender 48 kann beispielsweise als sogenannter Transponder ausgeführt sein, der lediglich dann, wenn er im ausgeklappten Zustand elektrische Energie empfängt, ein Sendesignal abgibt. Die vom Sender 48 abgegebenen Signale werden durch einen Empfänger 50 empfangen. Bei ausgeklapptem Skisack 42 erkennt dies der Empfänger 50 somit durch die von dem Sender 48 empfangenen Signale.

Beispielsweise ist die Klappe 44 des Skisacks 42 mittels einer Feder in Schließrichtung vorgespannt, so dass immer dann, wenn die Klappe 44 geöffnet ist, sich Ladegut im Skisack befindet. Bei geöffnetem Skisack 42 würde der Empfänger 50 und die integrierte Verarbeitungseinheit somit feststellen, dass aufgrund des ungesicherten Ladeguts 52 ein unsicherer Zustand vorliegt und ein entsprechendes Signal an eine Anzeigeeinheit abgeben. Die Anzeigeeinheit 54 würde daraufhin beispielswise ein rotes Warnsignal abgeben.

In dem in der Fig. 3 gezeigten Zustand ist das Ladegut 52 aber durch Spanngurte 56 und 58 gesichert, so dass tatsächlich ein fahrsicherer Zustand vorliegt. Die Empfänger- und Verarbeitungseinheit 50 erkennt den eingehängten Zustand der Spanngurte 56 und 58 mittels Sensoren 60 und 62, die im Bereich von Einhängestellen für die Spanngurte 56 und 58 vorgesehen sind. Die Sensoren 60 und 62 sind beispielsweise als Kraftsensoren ausgebildet, die eine Zugkraft der Spanngurte 56 und 58 auf die jeweiligen Einhängestellen erfassen. Die Signale der Sensoren 60 und 62 werden der Empfänger- und Verarbeitungseinheit 50 zugeführt. In dem in der Fig. 3 dargestellen, fahrsicheren Zustand gibt die Empfänger- und Verarbeitungseinheit 50 infolgedessen ein Signal an die Anzeigeeinheit 54 aus, gemäß dem eine Meldung "fahrsicherer Zustand", beispielsweise durch ein grünes Licht, angezeigt wird.

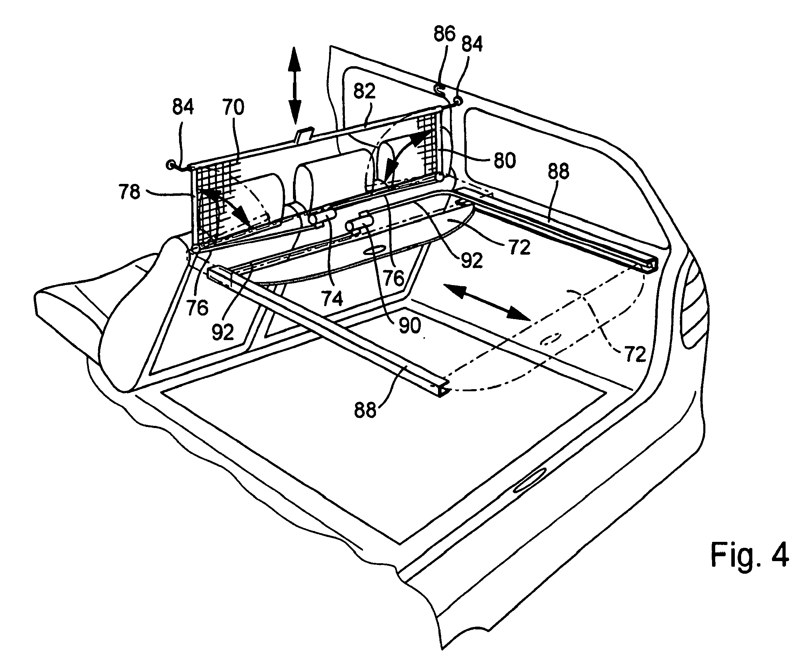

In der Darstellung der Fig. 4 ist in schematischer, perspektivischer Ansicht ein System zum Laderaumschutz gemäß einer dritten Ausführungsform dargestellt. Lediglich der Übersichtlichkeit der Darstellung halber sind in der Fig. 4 keine Sensoren zum Erfassen von Ladegut oder Sensoren zum Erfassen des Zustands von Schutzeinrichtungen gezeigt. Das in der Fig. 4 dargestellte System weist ein elektrisch ausfahrbares Trennnetz 70 sowie eine elektrisch ausfahrbare Laderaumabdeckung 72 auf. Das Trennnetz kann, wie durch einen Doppelpfeil angedeutet ist, in Fahrzeughochrichtung aus- und eingefahren werden. Die Laderaumabdeckung 72 kann, wie ebenfalls durch ein Doppelpfeil angedeutet ist, in Fahrzeuglängsrichtung ein- und ausgefahren werden. Zum Aus- und Einfahren des Trennnetzes 70 ist ein elektrischer Motor 74 vorgesehen, der mittels biegsamer Wellen 76 einen in Fahrtrichtung gesehen linken Hebelarm 78 und einen in Fahrtrichtung gesehenen rechten Hebelarm 80 antreibt. Die Hebelarme 78 und 80 können dabei jeweils um einen Anlenkpunkt von einer in der Fig. 4 gestrichelt dargestellten waagerechten Lage in eine in der Fig. 4 durchgezogen dargestellte senkrechte Lage verschwenkt werden. Während der Schwenkbewegung der Hebelarme 78 und 80 gleitet deren, dem jeweiligen Anlenkpunkt gegenüberliegendes Ende auf einem oberen Querträger 82 des Trennetzes 70 und verschiebt diesen Querträger 82 dadurch nach oben bzw. nach unten.

In der durchgezogen dargestellten senkrechten Stellung der Hebelarme 78 und 80 ist das Trennnetz 70 infolgedessen vollständig ausgefahren, wohingegen es in der gestrichelt dargestellten, waagerechten Position der Hebelarme 78 und 80 vollständig eingezogen ist.

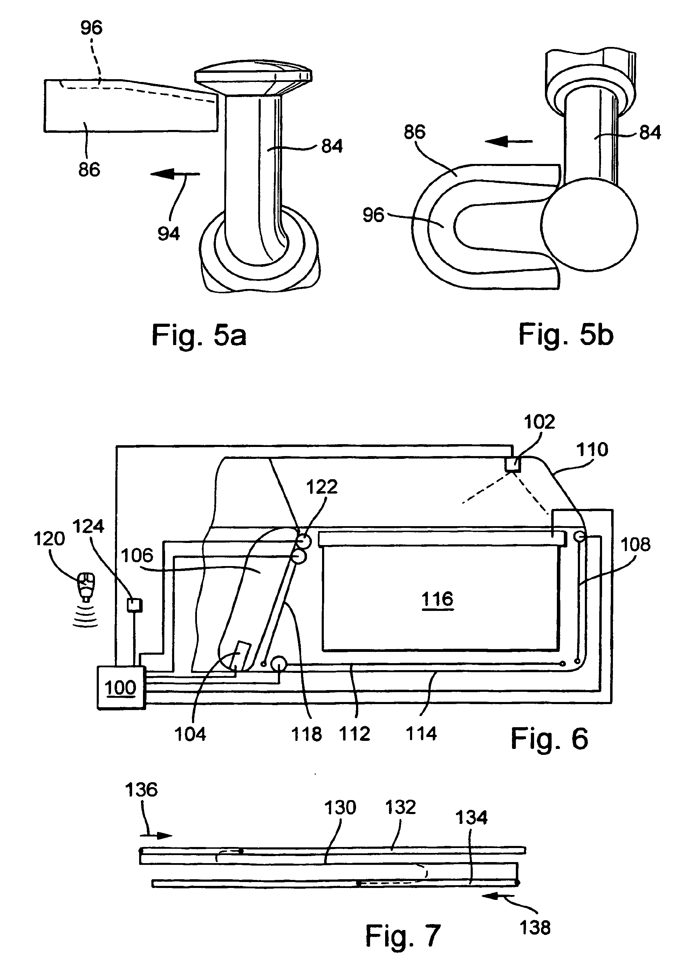

Zur crashsicheren Verriegelung des Trennetzes 70 in seiner vollständig ausgefahrenen Stellung ist rechts und links des oberen Querträgers 82 jeweils ein Verriegelungshaken 84 vorgesehen. Die Verriegelungshaken 84 weisen jeweils einen gekröpften Schaft und einen am Ende des Schaftes angeordneten linsenförmigen Kopf auf. In der vollständig ausgefahrenen Stellung des Trennnetzes 70 kommen die Verriegelungshaken 84 des Trennnetzes 70 vor Einhängeösen 86 zu liegen, die an dem rechten bzw. linken oberen Dachholm des Kraftfahrzeugs befestigt sind. Die Einhängeösen 86 sind U-förmig aufgebaut. In Fahrtrichtung gesehen kommen in der vollständig ausgefahrenen Stellung des Trennnetzes 70 die Verriegelungshaken 84 hinter die U-förmigen Einhängeösen 86 zu liegen, die entgegen der Fahrtrichtung geöffnet sind. Im Falle eines Aufpralls werden dadurch die Verriegelungshaken 84 in die U-förmigen Einhängeösen 86 hineinbewegt und dort für die Dauer des Aufpralls sicher gehalten. Der genaue Aufbau der Verriegelungshaken 84 und der Einhängeösen 86 wird anhand der Fig. 5a und 5b erläutert. Wichtig ist, dass durch die Gestaltung der Verriegelungshaken und der Einhängeösen 86 das Trennnetz 70 crashsicher angeordnet und dennoch elektrisch ein- und ausgezogen werden kann, ohne elektrisch aktivierbare Verriegelungselemente zu erfordern. -

Die crashsicher ausgebildete Laderaumabdeckung 72 ist an der rechten und linken Seitenwand des Laderaums in jeweils einer Führungsschiene 88 geführt. Auf diese Weise kann die Laderaumabeckung 72 crashsicher ausgebildet werden, da sie durch die Führungschienen 88 in der Lage ist, Ladegut im Laderaum bei einem Aufprall zurückzuhalten. Die Laderaumabdeckung 72 wird mittels eines Elektromotors 90 und zweier biegsamer Wellen 92 bewegt.

Signale zur Aktivierung der Elektromotoren 74 und 90 werden in dem System der Fig. 4 von einer nicht dargestellten Steuereinheit gegeben. Wird beispielsweise im Laderaum Ladegut erfasst, gibt diese Steuereinheit ein Signal an den Elektromotor 90, um die Laderaumabdeckung 72 zu schließen. Wenn die Laderaumabdeckung 72 vollständig geschlossen ist, wird dies von einem geeigneten Sensor detektiert und an die Steuereinheit zurückgemeldet. Die Steuereinheit kann dadurch dann einen fahrsicheren Zustand feststellen. Alternativ zum Schließen der Laderaumabdeckung kann das Trennnetz 70 ausgefahren werden, wobei das Trennnetz 70 zweckmäßigerweise dann ausgefahren wird, wenn das Ladegut im Laderaum zu hoch ist, um die Laderaumabdeckung 72 noch schließen zu können. Die Höhe des Ladeguts kann dabei über geeignete Sensoren erfasst werden. Die Laderaumabdeckung 72 kann im Bereich ihrer Hinterkante aber beispielsweise auch mit einem Kontaktschalter versehen werden, der beim Anstoßen an ein Hindernis ein Signal abgibt. Nach dem Detektieren von Ladegut könnte somit zunächst versucht werden, die Laderaumabdeckung 72 vollständig zu schließen.
Würde von dem Kontaktschalter am hinteren Ende der Laderaumabdeckung 72 dann ein zu hohes Ladegut detektiert werden, kann die Laderaumabdeckung in ihre Ausgangstellung zurückkehren und stattdessen das Trennnetz 70 ausgefahren werden. Trotz offener Laderaumabdeckung 72 würde in diesem Fall dann ein fahrsicherer Zustand festgestellt werden.

Die Darstellung der Fig. 5a zeigt den Verriegelungshaken 84 der Fig. 4 bei vollständig ausgefahrenem Trennnetz, wobei der Verriegelungshaken 84 in dieser Position unmittelbar vor der U-förmigen Einhängeöse 86 angeordnet ist. Eine Fahrtrichtung des Fahrzeugs ist mittels eines Pfeiles 94 angedeutet. Bei einem Aufprall wird der Verriegelungshaken 84 durch die dann auftretende Bremsbeschleunigung in der Fahrtrichtung 94 bewegt und greift dadurch in die Einhängeöse 86 ein. Wie der Darstellung der Fig. 5b zu entnehmen ist, weisen die Schenkel der Einhängeöse 86 einen Abstand auf, und geben einen Raum zwischen sich frei, der geringfügig größer als der Schaft des Verriegelunsghakens 84 aber deutlich kleiner als der Durchmesser des Kopfes des Verriegelungshakens 84 ist. Nachdem der Verriegelunsghaken 84 somit in der Fahrtrichtung 94 in die Einhängeöse 86 hineinbewegt wurde, ist dieser senkrecht zur Fahrtrichtung 94 nach unten arretiert. Infolge dessen kann das Trennnetz dann Ladegut, das in Fahrtrichtung gegen dieses anprallt, zurückhalten.

Wie der Darstellung der Fig. 5a und 5b weiterhin zu entnehmen ist, ist in der Einhängeöse 86 eine Führungsbahn 96 für den Kopf des Verriegelungshakens 84 ausgebildet. Durch diese Führungsbahn 96 wird der Kopf des Verriegelungshaken beim Einführen in die Einhängeöse 86 nicht nur in Fahrtrichtung sondern zusätzlich senkrecht zur Fahrtrichtung 94 nach oben bewegt. Dadurch wird im Crashfall das Trennnetz 70 durch die Bewegung des Verriegelungsghakens 84 nach oben gespannt. Die schräg nach oben gerichtete Führungsbahn 96 der Einhängeöse 86 kann dabei den Verriegelungshaken 84 während der Einführung wesentlich weiter nach oben bewegen, als in der Darstellung der Fig. 5a zu erkennen ist, um eine deutliche Spannung des Trennnetzes zu bewirken. Durch Spannen des Trennnetzes im Aufprallfall kann verhindert werden, dass auf das Trennnetz auftreffendes Ladegut dieses dehnt und kurzzeitig in den Kopfbereich der Fahrzeuginsassen gelangt.

Eine vierte Ausführungsform ist schematisch in der Fig. 6 dargestellt. Bei dem in der Fig. 6 dargestellten Schutzsystem könnnen Abdeckungen automatisch ausgefahren werden, um eine Laderaumverkleidung vor Verschmutzung zu schützen. Solche Verschmutzungen können beispielsweise dann auftreten, wenn Haustiere oder stark verschmutze Ladung im Laderaum eines Kraftfahrzeuges transportiert wird. Indem die Laderaumabdeckungen für die Laderaumverkleidungen automatisch ausgefahren werden können, entfällt das umständliche und optisch unbefriedigende Abdecken der Laderaumverkleidung durch Decken oder Wannen beim Transport von Haustieren oder schmutziger Ladung.

Das in der Fig. 6 dargestellte System weist eine Steuereinheit 100 auf, der Signale eines Sensors 102 zur Erfassung von Ladegut im Laderaum zugeführt werden. Weiterhin erhält die Steuer- und Verarbeitungseinheit 100 Signale von einem Sensor 104, der den aufrechten oder geklappten Zustand einer Rücksitzlehne 106 erfasst. Zum Schutz des Laderaums ist eine ausfahrbare Abdeckung 108 an einer Hecktüre 110 des Laderaums, eine ausfahrbare Abdeckung 112 über dem Boden 114 des Laderaums, jeweils eine ausfahrbare Abdeckung 116 an jeder Seite des Laderaums sowie eine ausfahrbare Abdeckung 118 an der dem Laderaum zugewandten Rückseite der Rücksitzlehne 106 vorgesehen.

Die Abdeckungen 108, 112, 116 und 118 können durch ein entsprechendes Steuersignal der Steuereinheit 100 ausgefahren oder eingezogen werden. Die Steuereinheit 100 erhält hierzu ein Anforderungssignal, beispielsweise funkgesteuert und ausgelöst durch Drücken einer Taste auf einem Fahrzeugschlüssel 120. Nach Empfang des Aufforderungssignals prüft die Steuereinheit 100 zunächst ab, ob der Sensor 102 Ladegut im Laderaum erfasst. Befindet sich kein Ladegut im Laderaum, steuert die Steuereinheit 100 die Abdeckungen 108, 112, 116 und 118 so an, dass diese vollständig ausfahren und die Laderaumverkleidung dadurch vor Verschmutzung schützen.

Wie bereits bei den zuvor erläuterten Ausführungsformen beschrieben, kann mittels der Steuereinheit 100 auch ein ausfahrbares Trennnetz 122 angesteuert werden.

Die Verarbeitungseinheit 100 erhält zudem Signale von einem Sensor 124. Der Sensor 124 ist beispielsweise als Regensensor und/oder als Sensor ausgebildet, der einen Untergrund in der Umgebung des Kraftfahrzeugs erfasst. Lässt ein durch den Sensor 124 erfasster Niederschlag oder eine erfasste Bodenbeschaffenheit, beispielsweise Erdreich oder Schnee, das Einbringen starker Verschmutzungen durch Haustiere oder Ladegut in den Laderaum befürchten, kann die Verarbeitungseinheit 100 automatisch und präventiv die Abdeckungen 108, 112, 116 und 118 in die Schutzstellung bringen.

In der schematischen Darstellung der Fig. 7 ist eine Vorrichtung in einem System zum Laderaumschutz gezeigt, mittels der ein Laderaumtepppich 130 automatisch gewendet werden kann. Besonders exklusive Fahrzeuge sind mit schmutzempfindlichen Laderaumteppichen ausgestattet. Der Laderaumteppich 130 weist eine optisch ansprechende und in optischer und haptischer Hinsicht zufriedenstellende Oberseite sowie eine schmutzunempfindliche und beispielsweise abwaschbare Unterseite auf. Eine Vorderkante des Laderaumteppichs ist an ihren beiden Enden in jeweils einer Führungsschiene 132 geführt, die sich parallel zu einem Laderaumboden über die gesamte Länge des Laderaumteppichs 130 erstreckt. In gleicher Weise ist eine Hinterkante des Laderaumteppichs 130 an ihren beiden Enden in jeweils einer Führungsschiene 134 geführt, die sich ebenfalls parallel zum Laderaumboden und parallel zu den Führungsschienen 132 erstreckt. Zum automatischen Wenden des Laderaumteppichs 130 wird die Vorderkante des Laderaumteppichs 130, beispielsweise mittels eines geeigneten elektrischen Antriebs in Richtung des Pfeiles 136 bewegt. Gleichzeitig wird die Hinterkante des Laderaumteppichs 130 mittels eines geeigneten Antriebs in Richtung des Pfeiles 138 bewegt. Der Laderaumteppich 130 ist dabei gestrichelt in einer Zwischenlage angedeutet. Wird die Vorderkante und die Hinterkante des Laderaumteppichs jeweils über die gesamte Länge der Führungsschienen 132 bzw. 134 verfahren, liegt die schmutzunempfindliche Unterseite des Laderaumteppichs 130 nun oben, so dass bedenkenlos stark verschmutztes Ladegut eingeladen werden kann. Ein Signal zum Wenden des Laderaumteppichs 130 kann beispielsweise in der im Zusammenhang mit der Fig. 6 beschriebenden Weise durch eine Steuer- und Verarbeitungseinheit oder funkgesteuert ausgegeben werden, wobei der Laderaumteppich 130 nur dann gewendet wird, wenn sich kein Ladegut auf ihm befindet.

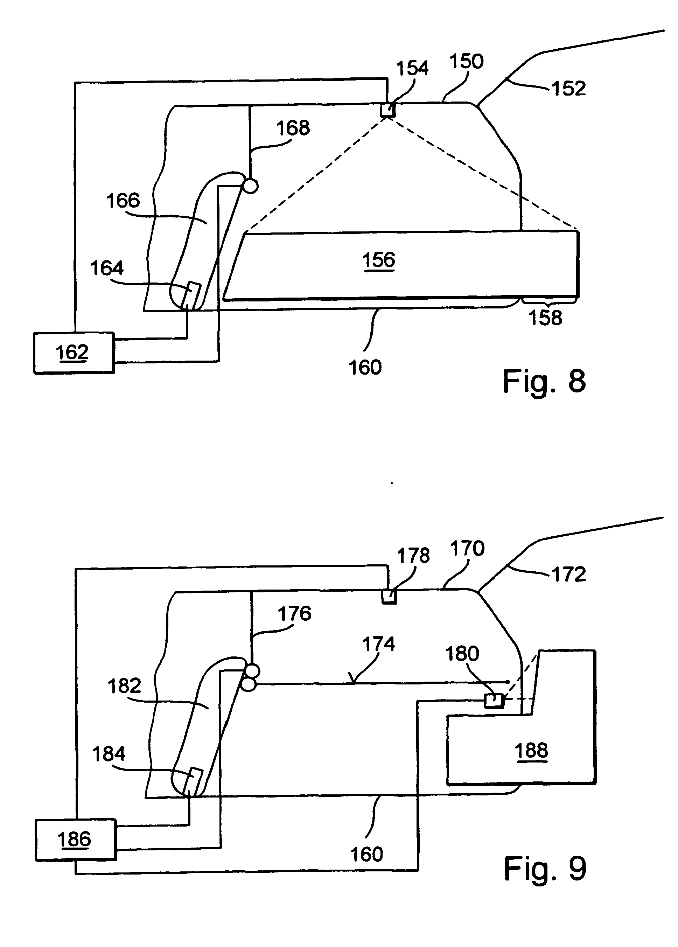

In der Darstellung der Fig. 8 ist abschnittsweise ein Kombi-Fahrzeug 150 mit einer aufklappbaren Heckklappe 152 dargestellt. Ein Sensor 154 erfasst Ladegut 156 nicht nur im Laderaum, sondern auch noch in einem Bereich 158 unmittelbar hinter dem Ende eines Laderaumbodens 160. Das Signal des Sensors 154 wird einer Steuereinheit 162 zugeführt. Mittels der Steuereinheit 162 kann ein Antrieb 164 zum Klappen einer Rücksitzlehne 166 sowie ein Antrieb zum Ausfahren eines Trennnetzes 168 angesteuert werden.

In der in der Fig. 8 dargestellten Situation ist das Ladegut 156 zu lang, um vollständig im Laderaum untergebracht zu werden, wenn die Rücksitzbank 166 sich in ihrer aufrechten Stellung befindet. Infolge dessen könnte die Heckklappe 152 nicht mehr geschlossen werden. Durch das Signal des Sensors 154 kann die Steuereinheit 162 erkennen, dass das Ladegut 156 zu lang ist. Die Steuereinheit 162 steuert daraufhin den Antrieb 164 in einer Weise an, dass die Rücksitzbank 166 in die waagerechte Stellung geklappt wird, in der der Laderaum verlängert ist. Gleichzeitig sorgt die Steuereinheit 162 dafür, dass das Trennnetz 168 zunächst eingefahren und in der waagerechten Position der Rücksitzbank 166 wieder ausgefahren und in eine crashsichere Position gebracht wird. Durch das anhand der Fig. 8 beschriebene System entfällt das mühsame Umbauen des Laderaums beim Einladen von sperrigen Ladegütern.

Ein weiteres System zum Laderaumschutz gemäß einer achten Ausführungsform ist schematisch in der Fig. 9 dargestellt. Auch hier weist ein Kraftfahrzeug 170 eine Heckklappe 172 und einen Laderaum auf, wobei der Laderaum durch eine waagerecht ausfahrbare Laderaumabdeckung 174 abgedeckt werden kann. Ein elektrisch ausfahrbares Trennnetz 176 trennt den Laderaum von einem Fahrgastraum. Sensoren 178 und 180 sind zur Erfassung von Ladegut vorgesehen. Eine Rücksitzlehne 182 ist mittels eines Antriebs 184 automatisch klappbar. Die Signale der Sensoren 178 und 180 werden einer Steuereinheit 186 zugeführt, die den Antrieb 184 zum Klappen der Rücksitzbank 182 und die Antriebe für das Trennnetz 176 und die Laderaumabdeckung 174 ansteuern kann.

Mittels des Sensors 180 kann erfasst werden, ob die Höhe eines einzuladenden Ladeguts 188 das Niveau der Laderaumabdeckung 174 überschreitet. In der in der Fig. 9 dargestellten Situation wird mittels des Sensors 180 erfasst, dass die Höhe des Ladeguts 188 so groß ist, dass dieses nicht unterhalb der Laderaumabdeckung angeordnet werden kann. Die Steuereinheit 186 erhält das Signal des Sensors 180 und veranlasst daraufhin, dass die Laderaumabdeckung 174 eingezogen wird. Das Ladegut 188 kann dadurch problemlos in den Laderaum eingeschoben werden. Gleichzeitig sorgt die Steuereinheit 186 dafür, dass das Trennnetz 176 ausgefahren wird und sich das Kraftfahrzeug 170 dadurch in einem fahrsicheren Zustand befindet.

Es ist festzuhalten, dass die verschiedenen Ausführungsformen lediglich der Übersichtlichkeit der Zeichnungen und der Verständlichkeit der Beschreibung halber mit unterschiedlichen Merkmalen versehen sind. Sämtliche Ausführungsformen können, auch teilweise, miteinander zu einem erfindungsgemäßen System zum Laderaumschutz kombiniert werden.

## Patentansprüche

1. System zum Laderaumschutz von Fahrzeugen, insbesondere Personenkraftwagen, mit einer Schutzeinrichtung im Laderaum. Sensoren (24. 26, 28, 30) zum Erfassen von Ladegut (18) im Laderaum, Mitteln (32, 34, 36; 60, 62) zum Erfassen des Zustandes der Schutzeinrichtung im Laderaum und Mitteln (20) zum Erzeugen eines Laderaumzustandssignals in Abhängigkeit der Erfassung von Ladegut (18) und der Erfassung des Zustandes der Schutzeinrichtung, **dadurch gekennzeichnet, dass** die Schutzeinrichtung eine crashsichere Laderaumabdeckung (16; 72) und fakultativ auch ein Trennnetz (14; 70) aufweist, die elektrisch betätigbar und ansteuerbar sind, um automatisch in jeweils eine Schutzstellung gebracht zu werden, und dass dann, wenn sich Ladegut (18) im Laderaum befindet und die Laderaumabdeckung (72) die Schutzstellung nicht erreicht, diese in eine Ausgangsstellung zurückkehrt, wobei dann, wenn weder die crashsichere Laderaumabdeckung (16; 72) noch das fakultativ auch verhandere Trennnetz 14; die jeweilige Schutzstellung erreicht, ein Laderaumzustandssignal erzeugt wird, das einen unsicheren Laderaumzustand anzeigt.

2. System zum Laderaumschutz nach Anspruch 1, **dadurch gekennzeichnet, dass** die Sensoren (24, 26, 28, 30) zum Erfassen von Ladegut (18) das Ladegut (18) nach dessen Lage, Größe und/oder Gewicht erfassen.

3. System zum Laderaumschutz nach einem der vorstehenden Ansprüche, **dadurch gekennzeichnet, dass** die Sensoren (24, 26, 28, 30) zum Erfassen von Ladegut (18) Bestandteil eines Fahrzeugsicherungssystems sind.

4. System zum Laderaumschutz nach einem der vorstehenden Ansprüche, **dadurch gekennzeichnet, dass** die Mittel zum Erfassen des Zustandes der Schutzeinrichtung einen an einer weiteren bewegbaren Schutzeinrichtung (42) angeordneten Sender (48) bzw. Empfänger und einen am Fahrzeug angeordneten Empfänger (50) bzw. Sender aufweisen.

5. System zum Laderaumschutz nach einem der vorstehenden Ansprüche, **dadurch gekennzeichnet, dass** in Abhängigkeit des Laderaumzustandssignals und der aktuellen Geschwindigkeit und/oder Fahrsituation des Fahrzeugs, die crashsichere Laderaumabdeckung (16; 72) und das fakultativ vorhandene Trennnetz (14, 70) automatisch in eine vordefinierte Stellung gebracht werden.

6. System zum Laderaumschutz nach Anspruch 5, **dadurch gekennzeichnet, dass** in Abhängigkeit des Laderaumzustandssignals und der aktuellen Geschwindigkeit und/oder Fahrsituation des Fahrzeugs das fakultativ vorhandene Trennnetz (14; 170) zwischen Laderaum und Insassenraum in oder entgegen einer Fahrzeuglängsrichtung verlagert oder vorgespannt wird.

7. System zum Laderaumschutz nach einem der vorstehenden Ansprüche, **dadurch gekennzeichnet, dass** in Abhängigkeit des Laderaumzustandssignals und auf ein Anforderungssignal hin weitere Schutzeinrichtungen (108, 112, 116, 118; 130) im Laderaum des Fahrzeugs in eine Schutzstellung bewegbar sind.

8. System zum Laderaumschutz nach Anspruch 7, **dadurch gekennzeichnet, dass** das Anforderungssignal durch einen Benutzer oder durch Sensoren (120, 124) ausgelöst wird, die Umgebungsbedingungen wie Niederschlag und/oder Bodenbeschaffenheit, in der Umgebung des Fahrzeugs erfassen.

## Claims

1. System for protecting the loading space of vehicles, especially passenger cars, having a protective device in the loading space, sensors (24, 26, 28, 30) for sensing loaded material (18) in the loading space, means (32, 34, 36; 60, 62) for sensing the state of the protective device in the loading space and means (20) for generating a loading space state signal as a function of the sensing of loaded material (18) and the sensing of the state of the protective device, **characterised in that** the protective device has a crash-proof loading space cover (16; 72) and facultatively also a separating net (14; 70) which are electrically operable and activatable so as to be brought automatically into a protective position in each case, and, when loaded material (18) is in the loading space and the loading space cover (72) does not reach the protective position, the loading space cover (72) returns to a home position, wherein, when neither the crash-proof loading space cover (16; 72) nor the facultatively also present separating net (14; 70) reaches the respective protective position, a loading space state signal is generated which indicates an unsafe loading space state.

2. System for protecting the loading space according to claim 1, **characterised in that** the sensors (24, 26, 28, 30) for sensing loaded material (18) sense the loaded material (18) in terms of its position, size and/or weight.

3. System for protecting the loading space according to one of the preceding claims, **characterised in that** the sensors (24, 26, 28, 30) for sensing loaded material (18) are components of a vehicle protection system.

4. System for protecting the loading space according to any one of the preceding claims, **characterised in that** the means for sensing the state of the protective device have a transmitter (48) or receiver, which is arranged on a further mobile protective device (42), and a receiver (50) or transmitter, respectively, which is arranged on the vehicle.

5. System for protecting the loading space according to any one of the preceding claims, **characterised in that** the crash-proof loading space cover (16; 72) and the facultatively present separating net (14; 70) are moved automatically into a predefined position as a function of the loading space state signal and the current velocity and/or driving situation of the vehicle.

6. System for protecting the loading space according to claim 5, **characterised in that** the facultatively present separating net (14; 70) between the loading space and the passenger compartment is displaced or pretensioned in or counter to a longitudinal direction of the vehicle as a function of the loading space state signal and the current velocity and/or driving situation of the vehicle.

7. System for protecting the loading space according to any one of the preceding claims, **characterised in that** further protective devices (108, 112, 116, 118; 130) in the loading space of the vehicle can be moved into a protective position as a function of the loading space state signal and in response to a request signal.

8. System for protecting the loading space according to claim 7, **characterised in that** the request signal is triggered by a user or by sensors (120, 124) which sense environmental conditions, such as precipitation and/or quality of the ground, in the surroundings of the vehicle.

## Revendications

1. Système de protection pour l'espace de chargement de véhicules, en particulier de véhicules de tourisme, comprenant un dispositif de protection dans l'espace de chargement, des capteurs (24, 26, 28, 30) servant à détecter un chargement (18) dans l'espace de chargement, des moyens (32, 34, 36 ; 60, 62) servant à détecter l'état du dispositif de protection dans l'espace de chargement, et des moyens (20) servant à produire un signal d'état de l'espace de chargement, en fonction de la détection du chargement (18) et de la détection de l'état du dispositif de protection,
**caractérisé**
**en ce que** le dispositif de protection présente une tablette de recouvrement de l'espace de chargement (16 ; 72) fiable en cas de collision, et également, de manière facultative, un filet de séparation (14 ; 70), qui peuvent être actionnés et commandés électriquement, pour être placés automatiquement et respectivement dans une position de protection, et
**en ce que**, lorsque le chargement (18) se trouve dans l'espace de chargement et que la tablette de recouvrement de l'espace de chargement (72) n'atteint pas la position de protection, ladite tablette de recouvrement de l'espace de chargement revient dans une position initiale, où alors, lorsque ni la tablette de recouvrement de l'espace de chargement (16 ; 72) fiable en cas de collision, ni le filet de séparation (14 ; 70) également présent de manière facultative n'atteint la position de protection respective, un signal d'état de l'espace de chargement est produit, signal d'état qui indique un état non sécurisé de l'espace de chargement.

2. Système de protection de l'espace de chargement selon la revendication 1, **caractérisé en ce que** les capteurs (24, 26, 28, 30) servant à détecter le chargement (18) détectent le chargement (18) d'après sa position, sa dimension et/ou son poids.

3. Système de protection de l'espace de chargement selon l'une ou l'autre des revendications précédentes, **caractérisé en ce que** les capteurs (24, 26, 28, 30) servant à détecter le chargement (18) font partie d'un système de sécurité du véhicule.

4. Système de protection de l'espace de chargement selon l'une quelconque des revendications précédentes, **caractérisé en ce que** les moyens servant à détecter l'état du dispositif de protection présentent un émetteur (48) ou récepteur disposé sur un autre dispositif de protection mobile (42), et un récepteur (50) ou émetteur disposé sur le véhicule.

5. Système de protection de l'espace de chargement selon l'une quelconque des revendications précédentes, **caractérisé en ce que**, en fonction du signal d'état de l'espace de chargement et de la vitesse réelle et/ou de la situation de conduite du véhicule, la tablette de recouvrement de l'espace de chargement (16 ; 72) fiable en cas de collision et le filet de séparation (14 ; 70) présent de manière facultative sont placés automatiquement dans une position prédéfinie.

6. Système de protection de l'espace de chargement selon la revendication 5, **caractérisé en ce que**, en fonction du signal d'état de l'espace de chargement et de la vitesse réelle et/ou de la situation de conduite du véhicule, le filet de séparation (14 ; 70), présent de manière facultative et placé entre l'espace de chargement et l'habitacle des passagers, est déplacé dans une direction longitudinale du véhicule ou en sens inverse de celle-ci, ou bien est préalablement tendu.

7. Système de protection de l'espace de chargement selon l'une quelconque des revendications précédentes, **caractérisé en ce que** d'autres dispositifs de protection (108, 112, 116, 118 ; 130) prévus dans l'espace de chargement du véhicule sont mobiles dans une position de protection, en fonction du signal d'état de l'espace de chargement et suite à un signal de demande.

8. Système de protection de l'espace de chargement selon la revendication 7, **caractérisé en ce que** le signal de demande est déclenché par un utilisateur ou par des capteurs (120, 124) qui, dans l'environnement du véhicule, détectent des conditions d'environnement telles que la pluie et/ou l'état du sol.
